(19) Europäisches Patentamt
European Patent Office
Office européen des brevets

(11) EP 1 712 593 B1

(12) **EUROPEAN PATENT SPECIFICATION**

(45) Date of publication and mention
of the grant of the patent:
**10.08.2011 Bulletin 2011/32**

(51) Int Cl.:
*C08L 77/06* (2006.01)     *C08K 3/24* (2006.01)
*C08K 3/32* (2006.01)     *C08K 3/38* (2006.01)

(21) Application number: **05704071.9**

(22) Date of filing: **25.01.2005**

(86) International application number:
**PCT/JP2005/000893**

(87) International publication number:
**WO 2005/073320 (11.08.2005 Gazette 2005/32)**

(54) **FLAME-RETARDANT POLYAMIDE COMPOSITION AND USE THEREOF**

FLAMMWIDRIGE POLYAMIDZUSAMMENSETZUNG UND VERWENDUNG DAVON

COMPOSITION POLYAMIDE IGNIFUGE ET SON UTILISATION

(84) Designated Contracting States:
**DE FR GB**

(30) Priority: **30.01.2004 JP 2004023957**

(43) Date of publication of application:
**18.10.2006 Bulletin 2006/42**

(73) Proprietor: **Mitsui Chemicals, Inc.**
**Tokyo 105-7117 (JP)**

(72) Inventor: **OHKAWA, Yoshihito**
**Sodegaura-shi, Chiba 2990265 (JP)**

(74) Representative: **Benson, John Everett et al**
**J. A. Kemp & Co.**
**14 South Square**
**Gray's Inn**
**London WC1R 5JJ (GB)**

(56) References cited:
| | |
|---|---|
| EP-A- 0 714 951 | EP-A- 1 186 634 |
| WO-A-92/02578 | JP-A- 3 066 755 |
| JP-A- 59 189 165 | JP-A- 2001 207 053 |
| JP-A- 2001 220 441 | JP-A- 2002 506 905 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 712 593 B1

**Description**

TECHNICAL FIELD

The present invention relates to a flame-retardant polyamide composition which has excellent mechanical properties such as toughness, etc., good melt fluidity and low hygroscopicity, as well as excellent heat resistance and color stability in the reflow soldering step, characterized in that an antimony compound is not used, and to electric/ electronic parts made of the flame-retardant polyamide composition.

More specifically, the invention particularly relates to a flame-retardant polyamide composition, which is suitable for forming electric/electronic parts, e.g., a fine-pitch connector, etc. which are thin and short in distance between the connector terminals, and to a connector with excellent heat resistance, made of the flame-retardant polyamide composition.

BACKGROUND ART

Polyamides in the past have been used as the materials for forming electronic parts because of their moldability into a desired shape after being molten under heating. In general, as for the polyamides, nylon 6, nylon 66 and the like are widely used. However, these aliphatic polyamides are not sufficiently resistant to heat as the raw materials for the surface-mounted parts, like a connector which is exposed to high temperature, e.g., in the reflow soldering step, although having good moldability. Under these circumstances, for the polyamides having high heat resistance, nylon 46 has been developed, but a problem occurs in that it has high water absorption. The electric/electronic parts molded using a nylon 46 resin composition had problems in that it may undergo dimensional changes due to water absorption, and when the molded product absorbs water, blister is generated by heating in the reflow soldering step. In order to solve these problems, an aromatic polyamide has been developed, which is derived from an aromatic dicarboxylic acid such as terephthalic acid and an aliphatic alkylene diamine. The aromatic polyamide is characterized in that it has higher heat resistance, mechanical strength and rigidity, and lower water absorption than aliphatic polyamides such as nylon 66 and nylon 46.

A polyamide resin is self-extinguishing in nature, but is required to be incorporated with a flame retardant for the applications in the surface-mounted members which require high flame retardancy and flame resistance, i.e., V-0 as specified by the Underwriters Laboratories Standard UL94. In general, polyamide is incorporated with brominated polystyrene as a flame retardant, and further, a metal oxide is used as a flame-retardant aid for the purpose of improving the flame retardancy of polyamide, and an antimony compound can be used in the flame-retardant aid to provide excellent flame retardancy.

However, from the environmental viewpoint, the antimony compound is, for example, under regulation of MAK (German Maximum Workplace Concentration), and further it is limited in the use forms due to its very high smoking property. The antimony compound is also under regulation of EN-71 (European Toy Safety Standards). Thus, the connectors within the applications of the electric/electronic parts are also obliged to be under such the regulation, so that the use of a non-antimony compound is highly desired. Further, in the case where a bromine-based flame retardant and an antimony compound are used in combination, even with respect to the productivity, the operations such as frequent disassembly and clear-up of the mold are needed because a large amount of gas is generated upon molding, which is the main cause of a mold deposit, thus leading to deteriorate the continuous productivity. In addition, there is also a problem of deterioration in color quality of the resin composition due to heat in the reflow soldering step.

Under these circumstances, many metal compounds have been proposed, which can be used instead of the antimony compounds, and flame-retardant resin compositions have been proposed, wherein the antimony compounds are partially or totally replaced with zinc borate. However, these are not satisfactory in toughness, as well as heat resistance and color stability in the reflow soldering step.

[Patent Document 1] JP-W (Japanese translation of PCT International application) No. 2001-501251
[Patent Document 2] JP-W (Japanese translation of PCT International application) No. 2002-506905

EP-A-1186634 discloses a polyamide resin composition comprising 100 parts by weight of a polyamide resin, from 1 to 100 parts by weight of a polybromostyrene, from 0.1 to 50 parts by weight of a flame - retardant synergist (C) and/or from 0.1 to 200 parts by weight of a filler (D), relative to 100 parts of the polyamide resin (A) in the composition. The preferred flame - retardant synergist (C) is zinc borate and zinc stannate. The application field of this resin composition is electric and electronic appliances.

DISCLOSURE OF THE INVENTION

[Problems to be solved by the Invention]

The present invention provides a polyamide composition, which is free from an environmental problems caused by an antimony compound and from a problem in productivity caused by the generation of gas upon molding which is the main cause of a mold deposit in the case where the antimony compound with the bromine-based flame retardant are used in combination, has excellent flame retardancy, toughness and melt fluidity, as well as good heat resistance and color stability in the reflow soldering step required in SMT (surface mounting technology), and thus is suitable in the applications of electric/electronic parts.

[Means for solving the Problems]

Under these circumstances, the present inventors have conducted extensive studies, and as a result, they found that a flame-retardant polyamide composition which comprises 10 to 80% by mass of a specific polyamide (A), 5 to 40% by mass of a flame retardant (B), 0.5 to 10% by mass of zinc borate and zinc phosphate (C), 0 to 60% by mass of an inorganic reinforcing material (D), and 0 to 5% by mass of a drip preventing agent (E), wherein the flame-retardant polyamide composition has excellent flame retardancy, toughness and melt fluidity, as well as good heat resistance and color stability in the reflow soldering step required in SMT, and thus is suitable for the applications in electric/electronic parts, and thus completing the invention.

The invention further provides:

- a molded product made of a flame-retardant polyamide composition of the invention;
- a connector made of a flame-retardant polyamide composition of the invention; and
- a use of a flame-retardant polyamide composition of the invention in an electric or electronic part.

[Effects of the Invention]

By using the flame-retardant polyamide composition according to the invention, which contains no antimony, a molded article which has excellent flame retardancy, toughness and melt fluidity, as well as excellent heat resistance required in SMT can be obtained. Further, since the amount of gas generated, which is a cause of a mold deposit upon molding in the case of the combination use with a bromine-based flame retardant, can be remarkably reduced, the frequency of the maintenance of the mold can be reduced, thus leading to improvement on the continuous productivity to a large degree. Therefore, its industrial value is significant.

BRIEF DESCRIPTION OF THE DRAWINGS

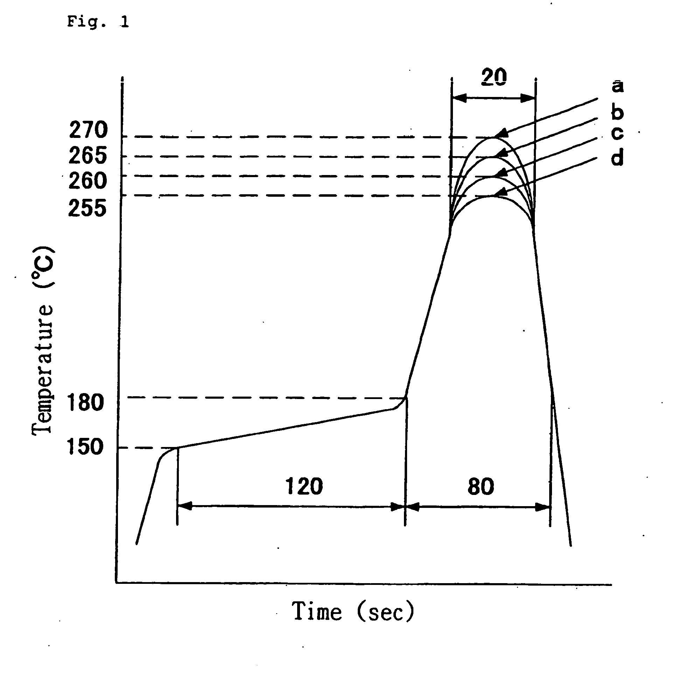

Fig. 1 is a view illustrating the relation of the temperature with the time during the reflow process of the reflow heat resistance test carried out with respect to Examples and Comparative Examples according to the present invention.

BEST MODE FOR CARRYING OUT THE INVENTION

Hereinafter, the present invention will be described in detail.

[Polyamide (A)]

The polyamide (A) of the invention comprises a dicarboxylic acid component unit (a-1) and a diamine component unit (a-2), and has an intrinsic viscosity $[\eta]$, as measured at a temperature of 25˚C in 96.5% sulfuric acid, of 0.5 to 3 dl/g, preferably 0.5 to 2 dl/g, and more preferably 0.7 to 1.3 dl/g, and a melting point, as measured by DSC, of 290 to 350˚C, and particularly preferably 300 to 330˚C. The polyamide resin within this range has particularly excellent heat resistance. In addition, the proportion of the polyamide (A) of the invention is 10 to 80% by mass and preferably 20 to 60% by mass, with respect to 100% by mass of the total amount of the polyamide (A), the flame retardant (B), the zinc borate and zinc phosphate (C), the inorganic reinforcing material (D), and the drip preventing agent (E).

[Dicarboxylic acid component unit (a-1)]

The dicarboxylic acid component unit (a-1) constituting the polyamide (A) used in the invention preferably comprises 30 to 100% by mole of a terephthalic acid component unit, 0 to 70% by mole of an aromatic dicarboxylic acid component unit other than terephthalic acid, and/or 0 to 70% by mole of an aliphatic dicarboxylic acid component unit having 4 to 20 carbon atoms. Among these, as the aromatic dicarboxylic acid component unit other than terephthalic acid, for example, isophthalic acid, 2-methyl terephthalic acid, naphthalene dicarboxylic acid and a combination thereof are preferred.

Further, the number of carbon atoms contained in the aliphatic dicarboxylic acid component unit is not particularly limited, but the aliphatic dicarboxylic acid component unit is derived from an aliphatic dicarboxylic acid having 4 to 20 carbon atoms, and preferably 6 to 12 carbon atoms. Examples of the aliphatic dicarboxylic acid used for deriving the aliphatic dicarboxylic acid component unit include adipic acid, suberic acid, azelaic acid, sebacic acid, decane dicarboxylic acid, undecane dicarboxylic acid, dodecane dicarboxylic acid, and the like. Among these, adipic acid is preferred.

Moreover, in the invention, with respect to 100% by mole of the total amount of the dicarboxylic acid component units, it is preferable that the terephthalic acid component unit is contained in the amount of 30 to 100% by mole, preferably 40 to 100% by mole and more preferably 40 to 80% by mole; the aromatic dicarboxylic acid component unit other than terephthalic acid is contained in the amount of 0 to 70% by mole, preferably 0 to 60% by mole and more preferably 20 to 60% by mole; and/or the aliphatic dicarboxylic acid component unit having 4 to 20 carbon atoms and preferably having 6 to 12 carbon atoms is contained in the amount of 0 to 70% by mole, preferably 0 to 60% by mole and more preferably 20 to 60% by mole. Further, in the invention, as the dicarboxylic acid component unit (a-1), a polyvalent carboxylic acid component unit in a small amount, for example, in an amount of about 10 mol% or less, may be contained together with the above-mentioned constitutional units. Specific examples of the polyvalent carboxylic acid component unit include tribasic acid or polybasic acid, such as trimellitic acid and pyromellitic acid.

[Diamine component unit (a-2)]

The diamine component unit (a-2) constituting the polyamide (A) used in the invention preferably comprises a straight chain and/or side chain aliphatic diamine component unit having 4 to 20 carbon atoms and preferably 6 to 12 carbon atoms, and/or an alicyclic diamine component unit having 6 to 25 carbon atoms and preferably 6 to 18 carbon atoms, which is derived from diamine comprising at least one alicyclic hydrocarbon ring.

Specific examples of the straight chain aliphatic diamine component unit include 1,4-diaminobutane, 1,6-diaminohexane, 1,7-diaminoheptane, 1,8-diaminooctane, 1,9-diaminononane, 1,10-diaminodecane, 1,11-diaminoundecane and 1,12-diaminododecane. Among these, 1,6-diaminohexane is preferred.

Further, specific examples of the side-chain aliphatic diamine component unit include 2-methyl-1,5-diaminopentane, 2-methyl-1,6-diaminohexane, 2-methyl-1,7-diaminoheptane, 2-methyl-1,8-diaminooctane, 2-methyl-1,9-diaminononane, 2-methyl-1,10-diaminodecane, 2-methyl-1,11-diaminoundecane, and the like. Among these, 2-methyl-1,5-diaminopentane is preferred.

Further, as for the alicyclic diamine component unit, mention may be made of a component unit derived from alicyclic diamine such as 1,3-diaminocyclohexane, 1,4-diaminocyclohexane, 1,3-bis(aminomethyl)cyclohexane, 1,4-bis(aminomethyl)cyclohexane, isophorone diamine, piperazine, 2,5-dimethylpiperazine, bis(4-aminocyclohexyl)methane, bis(4-aminocyclohexyl)propane, 4,4'-diamino-3,3'-dimethyldicyclohexylpropane, 4,4'-diamino-3,3'-dimethyldicyclohexylmethane, 4,4'-diamino-3,3'-dimethyl-5,5'-dimethyldicyclohexylmethane, 4,4'-diamino-3,3'-dimethyl-5,5'-dimethyldicyclohexylpropane, $\alpha,\alpha'$-bis(4-aminocyclohexyl)-p-diisopropylbenzene, $\alpha,\alpha'$-bis(4-aminocyclohexyl)-m-diisopropylbenzene, $\alpha,\alpha'$-bis(4-aminocyclohexyl)-1,4-cyclohexane, $\alpha,\alpha'$-bis(4-aminocyclohexyl)-1,3-cyclohexane, and the like. Among these alicyclic diamine component units, bis(aminomethyl)cyclohexane, bis(4-aminocyclohexyl)methane and 4,4'-diamino-3,3'-dimethyldicyclohexylmethane are preferred, and a component unit derived from alicyclic diamine such as bis(4-aminocyclohexyl)methane, 1,3-bis(aminocyclohexyl)methane and 1,3-bis(aminomethyl)cyclohexane is particularly preferred.

[Flame retardant (B)]

The flame retardant (B) used in the invention is added for the purpose of lowering flammability of the resin. For the flame retardant, a well-known one can be used. The flame retardant preferably includes an organic flame retardant, and among these, a halogen-containing compound, in particular a bromine-containing compound can be favorably used. The bromine-containing flame retardant is preferably a bromine-based flame retardant containing 50 to 80% by mass, and preferably 60 to 70% by mass of bromine, and it includes brominated polystyrene, polybrominated styrene, brominated polyphenylene ether, and the like.

Specific examples of the brominated polystyrene include polydibromostyrene, polytribromostyrene, polypentabromostyrene, polytribromo-α-methylstyrene, and the like. The above brominated polystyrene is prepared by bromination of polystyrene or polyα-methylstyrene, and the polybrominated styrene is prepared by polymerization of brominated styrene or brominated α-methylstyrene. In addition, for this, copolymerization of brominated styrene with an olefin having an epoxy group, or graft-copolymerization of an unsaturated carboxylic acid or a derivative thereof may be performed.

Further, in the invention, a bromine-based flame retardant can be used, for example, hexabromobenzene, pentabromoethylbenzene, hexabromobiphenyl, decabromodiphenyl, hexabromodiphenyl oxide, octabromodiphenyl oxide, decabromodiphenyl oxide and tetrabromobisphenol A, and a tetrabromobisphenol A derivative such as tetrabromobisphenol A-bis (hydroxyethyl ether), tetrabromobisphenol A-bis(2,3-dibromopropyl ether), tetrabromobisphenol A-bis(bromoethyl ether) and tetrabromobisphenol A-bis(allylether), a tetrabromobisphenol S, a tetrabromobisphenol S derivative such as tetrabromobisphenol S-bis(hydroxyethyl ether) and tetrabromobisphenol S-bis(2,3-dibromopropyl ether), a tetrabromophthalic anhydride, a tetrabromophthalic anhydride derivative such as tetrabromophthalimide and ethylenebistetrabromophthalimide, ethylenebis(5,6-dibromonorbornane-2,3-dicarboximide), tris-(2,3-dibromopropyl-1)-isocyanurate, a Diels-Alder adduct of hexabromocyclopentadiene, tribromophenylglycidyl ether, tribromophenyl acrylate, ethylenebistribromophenyl ether, ethylenebispentabromophenyl, ethylenebispentabromophenyl ether, tetradecabromodiphenoxybenzene, brominated polyphenylene oxide, a brominated epoxy resin, brominated polycarbonate, polypentabromobenzyl acrylate, octabromonaphthalene, pentabromocyclohexane, hexabromocyclododecane, bis(tribromophenyl)fumaramide, N-methylhexabromodiphenylamine, and the like.

These flame retardants can be selected from commercially available ones, and may be used in combination of two or more species. Among them, in particular brominated polystyrene and polybrominated styrene are preferably used.

It is preferable that the proportion of the flame retardant (B) to be added depends on the kind of the flame retardant, but the proportion is 5 to 40% by mass, and preferably 10 to 35% by mass, with respect to 100% by mass of the total amount of the polyamide (A), the flame retardant (B), the zinc borate and zinc phosphate (C), the inorganic reinforcing material (D), and the drip preventing agent (E).

[Zinc borate and at least one other salt of zinc (C)]

In the invention, zinc borate and at least one other salt of zinc are used to solve a problem in productivity caused by the generation of halogen gas which is the main cause of a mold deposit, and to improve flame retardancy, toughness and melt fluidity, as well as heat resistance and color stability in the reflow soldering step. Here, as for zinc borate, $2ZnO \cdot 3B_2O_3$, $4ZnO \cdot B_2O_3 \cdot H_2O$, $2ZnO \cdot 3B_2O_3 \cdot 3.5H_2O$, and the like can be mentioned. The zinc phosphate may be $Zn_3(PO_4)_2 \cdot ZnO$. The zinc borate and zinc phosphate (C) are preferably added in a proportion of 0.5 to 10% by mass, and more preferably 2 to 6% by mass, with respect to 100% by mass of the total amount of the polyamide (A), the flame retardant (B), the zinc borate and zinc phosphate (C), the inorganic reinforcing material (D), and the drip preventing agent (E). In order to obtain good flame retardancy, the amount to be added is preferably 0.5% by mass or more, while in order to obtain good mechanical properties and good heat resistance in the reflow soldering step, the amount to be added is preferably 10% by mass or less.

The mass ratio of zinc borate and zinc phosphate is typically 1 : 0.1 to 1 : 5, preferably 1 : 2 to 1 : 4, and more preferably 1 : 2.5 to 1 : 3.5.

[Inorganic reinforcing material (D)]

In the invention, an inorganic reinforcing material may be used, if necessary, and for the inorganic reinforcing material, various inorganic fillers in a shape such as a fibrous shape, a powdery shape, a granular shape, a tabular shape, a needle shape, a cloth shape, a mat shape, or the like, can be used. To be specific, it includes an inorganic compound in a powdery or tabular shape such as silica, silica alumina, alumina, calcium carbonate, titanium dioxide, talc, wollastonite, diatomaceous earth, clay, kaolin, spherical glass, mica, plaster, bengala, magnesium oxide and zinc oxide, an inorganic compound in the needle shape such as potassium titanate, and an inorganic fiber such as a glass fiber, a potassium titanate fiber, a metal-coated glass fiber, a ceramic fiber, wollastonite, a carbon fiber, a metal carbide fiber, a hardened metal fiber, an asbestos fiber and a boron fiber. For the filler in a fibrous shape, a glass fiber is particularly preferred. The glass fiber is used to improve the moldability of a composition, as well as to improve the mechanical characteristics such as tensile strength, bending strength and flexural modulus of elasticity, and the heat resistant characteristics such as heat distortion temperature, of a molded product formed from a thermoplastic resin composition. The glass fiber has an average length of typically in the range of 0.1 to 20 mm, and preferably in the range of 0.3 to 6 mm, and an aspect ratio [L (average length of fiber)/D (average external diameter of fiber)] of typically in the range of 10 to 5000, and preferably in the range of 2000 to 3000. It is preferable to use the glass fiber having the average length and the aspect ratio in the above-mentioned ranges.

These fillers may be used in a mixture of two or more species. Further, these fillers may be used as treated with a silane coupling agent or a titanium coupling agent. For example, it may be surface-treated with a silane-based compound such as vinyltriethoxysilane, 2-aminopropyltriethoxysilane and 2-glycidoxypropyltriethoxysilane.

It is preferable that the inorganic reinforcing material (D) is added in a proportion of 0 to 60% by mass and preferably 10 to 50% by mass, with respect to 100% by mass of the total amount of the polyamide (A), the flame retardant (B), the zinc borate and zinc phosphate (C), the inorganic reinforcing material (D), and the drip preventing agent (E).

[Drip preventing agent (E)]

In the invention, a drip preventing agent may be used, if necessary. The drip preventing agent is added for the purpose of preventing drip of the molten resin at the time of combustion (which means that the resin is molten, liquefied, and thus dropped at the time of combustion). For the drip preventing agent, a well-known one can be used, and the drip preventing agent preferably includes a polyolefin, Teflon (registered trademark), a modified one thereof, and in particular, a modified polyolefin having a carboxyl group, an acid anhydride group, an amino group, and the like in its molecule is preferred. The modified polyolefins include a modified polyethylene, a modified aromatic vinyl compound/conjugated diene copolymer such as modified SEBS or a hydride thereof, a modified polyolefin elastomer such as a modified ethylene/propylene copolymer, and the like.

It is preferable that the drip preventing agent (E) is added in a proportion of 0 to 5% by mass, and preferably 0.5 to 4% by mass, with respect to 100% by mass of the total amount of the polyamide (A), the flame retardant (B), the zinc borate and zinc phosphate (C), the inorganic reinforcing material (D), and the drip preventing agent (E).

[Other additives]

The flame-retardant polyamide composition according to the invention may be further incorporated, in addition to each of the above described components, with various well-known compounding agents, for example, a heat resistant stabilizer, a weathering stabilizer, a plasticizer, a thickening agent, an antistatic agent, a releasing agent, a pigment, a dye, an inorganic or organic filler, a nucleating agent, a fibrous reinforcing agent, and an inorganic compound such as carbon black, talc, clay and mica, within the range that does not impair the object of the invention. Further, in the invention, a halogen scavenger which is a usually used additive, may be used. For the halogen scavenger, for example, hydrotalcite is well known. In particular, the flame-retardant polyamide composition according to the invention would have further improved heat resistance, flame retardancy, rigidity, tensile strength, bending strength and impact resistance, when incorporated with a fibrous reinforcing agent.

The flame-retardant polyamide composition according to the invention may be also incorporated with other polymers within the range that does not impair the object of the invention. For other polymers as described above, mention may be made of polyolefins such as polyethylene, polypropylene, poly-4-methyl-1-pentene, an ethylene/1-butene copolymer, a propylene/ethylene copolymer, a propylene/1-butene copolymer and a polyolefin elastomer, polystyrene, polyamide, polycarbonate, polyacetal, polysulfone, polyphenylene oxide, a fluororesin, a silicone resin, PPS, LCP, and the like.

[Process for preparation of polyamide (A)]

The polyamide (A) used in the invention can be prepared by a well-known process, and can be further prepared by polycondensation with a dicarboxylic acid component unit and a diamine component unit. For example, as described in JP-A No. 2003-128913, the polyamide (A) can be prepared by heating the dicarboxylic acid component unit and the diamine component unit as described above in the presence of a catalyst to obtain a lower condensate, and then giving shear stress to the molten product of this lower condensate for polycondensation.

[Process for preparation of flame-retardant polyamide composition]

For the preparation of the flame-retardant polyamide composition according to the invention from each of the above-described components, a well-known process for kneading resin may be adopted, and for example, a process of mixing the above-described components by a Henschel mixer, a V blender, a ribbon blender, a tumbler blender, or the like, or a process of granulating or crushing the mixed components after they are melt-kneaded by a single-screw extruder, a multi-screw extruder, a kneader, a Banbury mixer or the like, may be adopted.

[Flame-retardant polyamide composition]

In the invention, the polyamide composition comprising the above-described components have flammability equivalent to V-0 as evaluated in accordance with UL94 standard, the amount of bromine gas generated upon molding of 0.1 ppm or less, and good color stability (heat resistance in the reflow soldering step). In addition, the polyamide composition has excellent characteristics such as a reflow heat-resistant temperature of 260˚C or higher and preferably 260 to 270˚C, a toughness of 40 mJ or more and preferably 40 to 50 mJ, and a flow length of 60 mm or longer and preferably 60 to 70 mm, and the polyamide composition has excellent flame retardancy, high toughness and melt fluidity and heat resistance, required in SMT, thereby it being suitable in the applications of electric/electronic parts.

[Molded product]

The flame-retardant polyamide composition of the invention can be molded to various molded products by using well-known molding methods such as a compression molding method, an injection molding method and an extrusion molding method.

The flame-retardant polyamide composition of the invention has excellent heat resistance, toughness and fluidity, and thus it can be used in the applications of the field requiring these characteristics, or the precision molding field. Specifically, mention may be made of various molded products such as an electric equipment parts for an automobile, electric/electronic parts such as a current limiter and a connector, a coil bobbin, a housing, and the like.

[Connector]

The flame-retardant polyamide composition of the invention has good fluidity of a molten product, as demonstrated by a thin-wall flow length test, and it can be used to efficiently prepare electronic parts such as a connector having a number of thin-wall parts. Electronic parts, e.g., a connector, made of the flame-retardant polyamide composition have high toughness, and cracks are hardly generated when joining the connector (when inserting a terminal of a male connector in a female connector). Further, electric/electronic parts of the invention have excellent heat resistance, and little thermal deformation in the reflow soldering step.

EXAMPLES

Hereinafter, the present invention will be described in detail with respect to Examples, but the invention is not limited to these Examples. In Examples and Comparative Examples, the measurement and evaluation of the respective properties are carried out using the following methods.

<Intrinsic viscosity [η]>

0.5 g of a polyamide resin was dissolved in 50 ml of a 96.5% sulfuric acid solution, and the number of seconds required for a sample solution to drop under the condition of $25 \pm 0.05$˚C was measured with an Ubbelohde viscometer. The intrinsic viscosity was calculated based on the following formulas:

$$[\eta] = \eta SP/[C(1+0.205\eta SP), \quad \eta SP = (t-t0)/t0$$

[η] = Intrinsic viscosity (dl/g), ηSP: Specific viscosity, C: Sample concentration (g/dl), t: Number of seconds required for sample solution to drop (seconds), and t0: number of seconds required for sulfuric acid as a blank to drop (seconds)

<Melting point>

A DSC-7 available from PerkinElmer, Inc. was used. A sample was once held at 330˚C for 5 minutes and followed by cooling to 23˚C at a rate of 10˚C/minute. Then, the temperature of the sample was elevated at 10˚C/minute and an endothermic peak based on melting at this time was defined as a melting point.

<Flammability test>

By using a test piece of 1/32 inch $\times$ 1/2 inch $\times$ 5 inches prepared by injection molding, a vertical combustion test was performed and flame retardancy was evaluated in accordance with the UL94 standard (UL Test No. UL94, dated on June 18, 1991).

Further, in the case where the total time of each of flammable combustion time after completion of applying the flame on the five test pieces in the respective 2 tests (total 10 tests) was shorter, which is equivalent to V-0 in accordance with UL94, the flame retardancy was evaluated as excellent. Further, in order to obtain the evaluation of V-0 based on UL94, the standard for the total of each flammable combustion time as above is 50 seconds or shorter.

Molding machine: Tuparl TR40S3A manufactured by Sodick Plustech Co., Ltd., Cylinder temperature: NT/C1/C2/C3 = 330˚C/330˚C/330˚C/325˚C, Mold temperature: 120˚C.

<Reflow heat resistance test>

A test piece of 64 mm in length, 6 mm in width and 0.8 mm in thickness prepared by injection molding was humidity-conditioned at a temperature of 40˚C and a relative humidity of 95% for 96 hours. Reflow process of the temperature profile shown in Fig. 1 was performed with the use of a reflow soldering machine using both an infrared ray and hot air (SOLSIS-2011R manufactured by Nihon ANTOM Co. Ltd.).

The test piece was set on a glass epoxy substrate of 1 mm in thickness, and the substrate was provided with a temperature sensor thereon, to measure the temperature profile. Referring to Fig. 1, the test piece was heated to predetermined set temperatures ("a": 270˚C, "b": 265˚C, "c": 260˚C and "d": 255˚C), at which it was heated and held for 20 seconds, to find the highest set temperature at which the above test piece was not molten and no blister was observed on its surface. This highest set temperature was defined as a reflow heat-resistant temperature.

Herein, the above-described set temperature means a temperature at which the test piece is held under heating for 20 seconds or longer in order that the reflow solder is sufficiently molten. The test piece is heated to a temperature as high as 10˚C higher than the set temperature as shown in Fig. 1 in the reflow step, although varying depending on the reflow soldering machine used.

<Bending test (toughness)>

A test piece of 64 mm in length, 6 mm in width and 0.8 mm in thickness prepared by injection molding was subjected to a bending test using a bending tester (AB5 manufactured by NTESCO) under the conditions of a span of 26 mm and a bending rate of 5 mm/minute, to measure energy (toughness) required for fracturing the test piece.

Molding machine: Tuparl TR40S3A manufactured by Sodick Plustech Co., Ltd., Cylinder temperature: NT/C1/C2/C3 = 330˚C/330˚C/330˚C/325˚C, Mold temperature: 100˚C.

<Flow length test (fluidity)>

The sample was injected into a bar-flow mold of 10 mm in width and 0.5 mm in thickness under the following conditions. The first 20 shots were discarded, and the next 10 shots were measured for flow lengths (mm), to determine the average length.

Injection molding machine: Tuparl TR40S3A manufactured by Sodick Plustech Co., Ltd.

Injection pressure: 1000 kg/cm$^2$, Injection rate: 99%, Cylinder set temperature: NT/C1/C2/C3:

330˚C/330˚C/330˚C/325˚C, Mold temperature; 120˚C.

<Test for measuring amount of bromine gas generated>

1.0 g of a sample was heated in a sealed quartz tube using a device of generating gas with heating under an argon gas atmosphere at a temperature of 330˚C for 30 minutes, and thus generated gas was captured in an aqueous hydrazine solution and the amount of bromine gas generated was measured by ion chromatography.

<Color stability test (thermostability)>

When performing the reflow heat resistance test, change in color of the test piece before and after the reflow heat resistance test was evaluated by visual observation. Herein, the test results are as follows:

○: No occurrence of color change.
Δ: Some occurrence of color change.
✕: Remarkable occurrence of color change.

The following components were used for Examples and Comparative Examples.

[Polyamide (A)]

Composition: Dicarboxylic acid component unit (terephthalic acid: 62.5% by mole and adipic acid: 37.5% by mole), Diamine component unit (1,6-diaminohexane: 100% by mole)
Intrinsic viscosity [η]: 1.0 dl/g
Melting point: 320°C

[Flame retardant (B)]

Polybrominated styrene: PBS64-HW manufactured by GLC
Bromine content: 64% by mass

[Zinc borate and at least one other salt of zinc (C)]

Zinc borate: $2ZnO \cdot 3B_2O_3$
Zinc phosphate: $Zn_3(PO_4)_2ZnO$
Zinc stannate: $ZnSnO_3$
Calcium zinc molybdate: $ZnCaMO_4$

[Inorganic reinforcing material (D)]

Glass fiber/ECS03-615 (manufactured by Central Glass Co., Ltd.)

[Drip preventing agent (E)]

Maleated SEBS: Tuftec M1913 manufactured by Asahi Kasei Corporation
In addition to the above, the following components were added: 0.3 parts by mass of hydrotalcite (product name: DHT-4C, manufactured by Kyowa Chemical Industry Co., Ltd.), 0.3 parts by mass of wax (product name: Hostamont CAV102, manufactured by Clariant (Japan) K. K.), and 0.7 parts by mass of talc (product name: Hifiller #100, whiteness: 95, manufactured by Matsumura Sangyo K. K.)

[Examples 1 to 4 and 7 and Comparative Examples 6 and 7]

Each of the components as described above was mixed in a quantitative ratio as shown in Table 1, put into a twin screw extruder equipped with a vent which is set at a temperature of 320°C, and then melt-kneaded to obtain pellet-shaped compositions. Then, the results of evaluation on the respective properties of the obtained polyamide compositions are shown in Table 1.

[Comparative Example 1]

A pellet-shaped composition was obtained in the same manner as in Example 1, except that zinc borate and at least one other salt of zinc (C) were replaced with sodium antimonate (SA-A manufactured by Nihon Seiko Co., Ltd.) in a quantitative ratio as shown in Table 1. Then, the result of evaluation on the properties of the obtained polyamide composition is shown in Table 1.

[Comparative Examples 2 to 5]

Pellet-shaped compositions were obtained in the same manner as in Example 1, except that zinc borate and at least one other salt of zinc (C) were replaced with the salts of zinc as shown in Table 1 in a quantitative ratio as shown in Table 1. Then, the results of evaluation on the respective properties of the obtained polyamide compositions are shown in Table 1.

Comparative Example 6    Comparative Example 7

[Table 1]

| | | Unit | Example | | | | | | | Comparative Example | | | | |
|---|---|---|---|---|---|---|---|---|---|---|---|---|---|---|
| | | | 1 | 2 | 3 | 4 | ⟨6⟩ | ⟨7⟩ | 7 | 1 | 2 | 3 | 4 | 5 |
| Polyamide (A) | | % by mass | 41 | 41 | 41 | 42 | 42 | 42 | 40 | 41 | 41 | 41 | 42 | 42 |
| Flame retardant (B) | | % by mass | 23 | 23 | 23 | 21 | 21 | 21 | 20 | 24 | 23 | 23 | 21 | 21 |
| Zinc borate and at least one other salt of zinc (C) | Zinc borate | % by mass | 1 | 2 | 3 | 1 | 2 | 2 | 2 | - | 4 | - | - | - |
| | Zinc phosphate | % by mass | 3 | 2 | 1 | 3 | - | - | 6 | - | - | 4 | - | - |
| | zinc stannate | % by mass | - | - | - | - | 2 | - | - | - | - | - | 4 | - |
| | calcium zinc molybdate | % by mass | - | - | - | - | - | 2 | - | - | - | - | - | 4 |
| Sodium antimonate | | % by mass | - | - | - | - | - | - | - | 4 | - | - | - | - |
| Inorganic | | % by | 30 | 30 | 30 | 30 | 30 | 30 | 30 | 30 | 30 | 30 | 30 | 30 |

| reinforcing material (D) | | mass | | | | | | | | | | | | |
|---|---|---|---|---|---|---|---|---|---|---|---|---|---|---|
| Drip preventing agent (E) | | % by mass | 1 | 1 | 1 | 2 | 2 | 2 | 1 | 1 | 1 | 1 | 1 | 1 |
| Flammability test | Evaluation in accordance with UL94 standard | – | Equivalent to V-0 | Equivalent to V-0 | Equivalent to V-0 | Equivalent to V-0 | Equivalent to V-0 | Equivalent to V-0 | Equivalent to V-0 | Equivalent to V-0 | Equivalent to V-0 | Equivalent to V-1 | Equivalent to V-0 | Equivalent to V-2 |
| | Total of flammable combustion times | sec | 10 | 15 | 25 | 6 | 8 | 13 | 5 | 4 | 35 | 30 | 15 | 30 |
| Property | Bending test (Toughness) | mJ | 40 | 40 | 40 | 45 | 45 | 40 | 40 | 40 | 42 | 40 | 47 | 38 |
| | Reflow heat-resistant temperature | °C | 260 | 260 | 260 | 265 | 260 | 260 | 260 | 265 | 260 | 255 | 260 | 260 |
| | Flow length | mm | 67 | 64 | 64 | 65 | 70 | 68 | 62 | 60 | 63 | 68 | 75 | 70 |
| Color stability (thermostability) | | – | △ | △ | △ | O | △ | △ | △ | △ | × | △ | × | △ |
| Amount of bromine gas generated | | ppm | < 1 | < 1 | < 1 | < 1 | < 1 | < 1 | < 1 | 170 | < 1 | < 1 | < 1 | < 1 |

INDUSTRIAL APPLICABILITY

The present invention provides a material, which is free from an environmental problems caused by an antimony compound and from a problem in productivity caused by the generation of gas upon molding, which is the main cause of a mold deposit, particularly, in the case of the combination use with a flame retardant containing bromine, has excellent flame retardancy, toughness and melt fluidity, as well as excellent heat resistance and color stability in the reflow soldering step required in SMT, and thus can be favorably used in the applications of electric/electronic parts or the applications of the precision molding field.

**Claims**

**1.**   A flame-retardant polyamide composition which comprises 10 to 80% by mass of a polyamide (A), 5 to 40% by mass of a flame retardant (B), 0.5 to 10% by mass of zinc borate and zinc phosphate (C), 0 to 60% by mass of an inorganic reinforcing material (D), and 0 to 5% by mass of a drip preventing agent (E).

**2.**   A flame-retardant polyamide composition according to claim 1, wherein the mass ratio of zinc borate and zinc phosphate is 1 : 0.1 to 1 : 5.

**3.**   A flame-retardant polyamide composition according to claim 1 or 2, wherein the polyamide (A) comprises 100% by mole of recurring units comprising a dicarboxylic acid component unit (a-1) consisting of 30 to 100% by mole of a terephthalic acid component unit, 0 to 70% by mole of an aromatic dicarboxylic acid component unit other than terephthalic acid, and/or 0 to 70% by mole of an aliphatic dicarboxylic acid component unit having 4 to 20 carbon atoms (provided that the total amount of these dicarboxylic acid component units is 100% by mole), and a diamine component unit (a-2) consisting of an aliphatic diamine component unit and/or an alicyclic diamine component unit.

4. A flame-retardant polyamide composition according to any one of the preceding claims, wherein the polyamide (A) comprises 50 to 100% by mole of 1,6-diaminohexane with respect to the diamine component unit, and has a melting point in the range of 290 to 350˚C, and an intrinsic viscosity [η], as measured in a concentrated sulfuric acid at 25 ˚C, in the range of 0.5 to 3 dl/g.

5. A flame-retardant polyamide composition according to any one of the preceding claims , which has flammability equivalent to V-0 as evaluated in accordance with UL94, 5 the amount of bromine gas generated upon molding of 0.1 ppm or less, a reflow heat-resistant temperature of 260˚C or higher, a toughness of 40 mJ or more, and a flow length of 60 mm or longer.

6. A molded product made of a flame-retardant polyamide composition according to any one of claims 1 to 5.

7. A connector made of a flame-retardant polyamide composition according to any one of claims 1 to 5.

8. Use of a flame-retardant polyamide composition according to any one of claims 1 to 5 in an electric or electronic part.

9. Use according to claim 8, wherein the part is a connector.


**Patentansprüche**

1. Flammwidrige Polyamidzusammensetzung, welche umfasst 10 bis 80 Massen% eines Polyamids (A), 5 bis 40 Massen% eines Flammschutzmittels (B), 0,5 bis 10 Massen% von Zinkborat und Zinkphosphat (C), 0 bis 60 Massen% eines anorganischen Verstärkungsmittels (D), und 0 bis 5 Massen% eines das Nachtropfen verhindernden Mittels (E).

2. Flammwidrige Polyamidzusammensetzung nach Anspruch 1, wobei das Massenverhältnis von Zinkborat und Zinkphosphat 1 : 0,1 bis 1 : 5 ist.

3. Flammwidrige Polyamidzusammensetzung nach Anspruch 1 oder 2, wobei das Polyamid (A) umfasst 100 Mol% wiederkehrender Einheiten, umfassend eine Dicarbonsäure-Komponenteneinheit (a-1), bestehend aus 30 bis 100 Mol% einer Terephthalsäure-Komponenteneinheit, 0 bis 70 Mol% einer aromatischen Dicarbonsäure-Komponenteneinheit, die anders als Terephthalsäure ist, und/oder 0 bis 70 Mol% einer aliphatischen Dicarbonsäure-Komponenteneinheit mit 4 bis 20 Kohlenstoffatomen (vorausgesetzt, dass die Gesamtmenge dieser Dicarbonsäure-Komponenteneinheiten 100 Mol% beträgt), und eine Diamin-Komponenteneinheit (a-2), bestehend aus einer aliphatischen Diamin-Komponenteneinheit und/oder einer alicyclischen Diamin-Komponenteneinheit.

4. Flammwidrige Polyamidzusammensetzung nach einem der vorangehenden Ansprüche, wobei das Polyamid (A) 50 bis 100 Mol% von 1,6-Diaminhexan, bezogen auf die Diamin-Komponenteneinheit, umfasst und einen Schmelzpunkt im Bereich von 290 bis 350˚C, und eine intrinsische Viskosität [D], gemessen in konzentrierter Schwefelsäure bei 25˚C, im Bereich von 0,5 bis 3 dl/g aufweist.

5. Flammwidrige Polyamidzusammensetzung nach einem der vorangehenden Ansprüche, welche Brennbarkeit äquivalent dem V-0, bewertet gemäß UL94, die Menge eines während des Formens erzeugten Bromgases von 0,1 ppm oder weniger, eine Rückfluß-Wärmeresistenztemperatur von 260˚C oder höher, eine Zähigkeit von 40 mJ oder mehr, und eine Fließlänge von 60 mm oder länger aufweist.

6. Formprodukt, hergestellt aus einer flammwidrigen Polyamidzusammensetzung nach einem der Ansprüche 1 bis 5.

7. Verbinder, hergestellt aus einer flammwidrigen Polyamidzusammensetzung nach einem der Ansprüche 1 bis 5.

8. Verwendung einer flammwidrigen Polyamidzusammensetzung nach einem der Ansprüche 1 bis 5 in einem elektrischen oder elektronischen Bauteil.

**EP 1 712 593 B1**

9. Verwendung nach Anspruch 8, wobei das Bauteil ein Verbinder ist.

**Revendications**

1. Composition de polyamide ignifugée, qui comprend de 10 à 80 % en masse d'un polyamide (A), de 5 à 40 % en masse d'un agent ignifugeant (B), de 0,5 à 10 % en masse de borate de zinc et phosphate de zinc (C), de 0 à 60 % en masse d'un matériau inorganique de renfort (D), et de 0 à 5 % en masse d'un agent de prévention de chute de gouttes (E).

2. Composition de polyamide ignifugée, conforme à la revendication 1, dans laquelle le rapport en masse des borate de zinc et phosphate de zinc vaut de 1/0, 1 à 1/5.

3. Composition de polyamide ignifugée, conforme à la revendication 1 ou 2, dans laquelle le polyamide (A) comprend 100 % en moles de motifs répétés qui comprennent des motifs constitutifs (a-1) de type acide dicarboxylique, consistant en 30 à 100 % en moles de motifs constitutifs de type acide téréphtalique, 0 à 70 % en moles de motifs constitutifs de type acide dicarboxylique aromatique autre que l'acide téréphtalique et/ou 0 à 70 % en moles de motifs constitutifs de type acide dicarboxylique aliphatique comportant 4 à 20 atomes de carbone (sous réserve que la quantité totale de ces motifs constitutifs de type acide dicarboxylique vaille 100 % en moles), et des motifs constitutifs (a-2) de type diamine, consistant en motifs constitutifs de type diamine aliphatique et/ou en motifs constitutifs de type diamine alicyclique.

4. Composition de polyamide ignifugée, conforme à l'une des revendications précédentes, dans laquelle le polyamide (A) comprend, en fait de motifs constitutifs de type diamine, 50 à 100 % en moles de motifs de 1,6-diamino-hexane, et présente un point de fusion situé dans la gamme de 290 à 350 ˚C, ainsi qu'une viscosité intrinsèque $[\eta]$ qui, mesurée à 25 ˚C dans de l'acide sulfurique concentré, vaut de 0,5 à 3 dL/g.

5. Composition de polyamide ignifugée, conforme à l'une des revendications précédentes, qui présente une inflammabilité de niveau V-0 selon le test UL-94, qui dégage au plus 0,1 ppm de brome gazeux après moulage, et qui présente une température de résistance à la chaleur de fusion d'au moins 260 ˚C, une ténacité d'au moins 40 mJ, et une longueur d'écoulement d'au moins 60 mm.

6. Objet moulé fait d'une composition de polyamide ignifugée conforme à l'une des revendications 1 à 5.

7. Connecteur fait d'une composition de polyamide ignifugée conforme à l'une des revendications 1 à 5.

8. Utilisation d'une composition de polyamide ignifugée conforme à l'une des revendications 1 à 5, dans une pièce électrique ou électronique.

9. Utilisation conforme à la revendication 8, ladite pièce étant un connecteur.

**13**

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001501251 W
- JP 2002506905 W
- EP 1186634 A
- JP 2003128913 A